# EUROPEAN PATENT APPLICATION

(11) **EP 4 716 096 A1**
(43) Date of publication of application: **25.03.2026**
(21) Application number: 24806871.0
(22) Date of filing: 01.04.2024
(51) Int. Cl.: H02S 50/00, H02S 10/40

(54) **POWER CONTROL DEVICE**

(30) Priority: 15.05.2023 JP 2023079819
(71) Applicant: Niterra Co., Ltd., Nagoya-shi, Aichi 461-0005 (JP)
(72) Inventor: KUMAZAWA, Shinji, Nagoya-shi, Aichi 461-0005 (JP); UEMURA, Tomonori, Nagoya-shi, Aichi 461-0005 (JP)
(74) Representative: Grünecker Patent- und Rechtsanwälte PartG mbB
(86) International application number: PCT/JP2024/013425
(87) International publication number: WO 2024/236917

(57) **Abstract**

A power control apparatus (10) controls power input from a solar cell panel (2) and determines occurrence of an anomaly based on current, voltage, or power supplied from the solar cell panel (2). The solar cell panel (2) has a structure in which multiple solar cell layers (3), each absorbing light of a different wavelength, are stacked on each other. The power control apparatus (10) includes a power conversion section (30) which converts and outputs voltages or currents input from the solar cell layers (3), and an anomaly determination section (29) which determines occurrence of an anomaly. The anomaly determination section (29) determines occurrence of an anomaly based on current, voltage, or power supplied from each of the solar cell layers (3).

## Description

### TECHNICAL FIELD

The present disclosure relates to a power control apparatus.

### BACKGROUND ART

A solar cell module disclosed in Patent Document 1 has a structure in which two or more solar cell panels are stacked. This solar cell module has a first solar cell panel and a second solar cell panel. The first solar cell panel and the second solar cell panel are electrically connected in parallel. Even in the case where the number of stacked panels is two or more, the solar cell module has only a single power output terminal, because the panels are electrically connected in parallel.

### PRIOR ART DOCUMENT

### PATENT DOCUMENT

Patent Document 1: JP2021-132233A

### SUMMARY OF THE INVENTION

### PROBLEM TO BE SOLVED BY THE INVENTION

The technique disclosed in Patent Document 1 has the following problem. Since two or more stacked panels are connected in parallel, even when an anomaly where power is not supplied from one or some of the panels occurs, the power supply from the solar cell module is not interrupted. Therefore, it is difficult to determine the anomaly where power is not supplied from one or some of the panels, on the basis of the power supplied from the solar cell module.

An object of the present disclosure is to provide a technique for making it possible to determine occurrence of an anomaly in one or some of multiple solar cell layers stacked on each other.

### MEANS FOR SOLVING THE PROBLEMS

A power control apparatus of the present disclosure is a power control apparatus that controls power input from a solar cell panel and determines occurrence of an anomaly based on current, voltage, or power supplied from the solar cell panel,
wherein the solar cell panel has a structure in which multiple solar cell layers, each absorbing light of a different wavelength, are stacked on each other,
wherein the power control apparatus includes a power conversion section that converts and outputs voltages or currents input from the solar cell layers, and an anomaly determination section that determines occurrence of an anomaly, and
wherein the anomaly determination section determines occurrence of an anomaly on the basis of current, voltage, or power supplied from each of the solar cell layers.

### EFFECT OF THE INVENTION

The present disclosure makes it possible to determine that an anomaly has occurred in one or some of multiple solar cell layers stacked on each other.

### BRIEF DESCRIPTION OF THE DRAWINGS

[Fig. 1] Fig. 1 is a block diagram schematically showing, as an example, the configuration of a vehicle that includes a power control apparatus for a solar cell panel according to a first embodiment.
[Fig. 2] Fig. 2 is a perspective view of the solar cell panel.
[Fig. 3] Fig. 3 is a circuit diagram schematically showing, as an example, MPPT circuits, a control section, and an anomaly determination section, which are included in the power control apparatus of Fig. 1.
[Fig. 4] Fig. 4 is a flowchart showing the flow of an anomaly determination process performed by the anomaly determination section.
[Fig. 5] Fig. 5 is a block diagram schematically showing, as an example, the configuration of a vehicle that includes a power control apparatus for a solar cell panel according to a second embodiment.

### MODE FOR CARRYING OUT THE INVENTION

### [Description of embodiments of the present disclosure]

In the below, embodiments of the present disclosure are listed and shown as examples.
[1] A power control apparatus that controls power input from a solar cell panel and determines occurrence of an anomaly based on current, voltage, or power supplied from the solar cell panel,
   wherein the solar cell panel has a structure in which multiple solar cell layers, each absorbing light of a different wavelength, are stacked on each other,
   wherein the power control apparatus includes a power conversion section that converts and outputs voltages or currents input from the solar cell layers, and an anomaly determination section that determines occurrence of an anomaly, and
   wherein the anomaly determination section determines occurrence of an anomaly based on current, voltage, or power supplied from each of the solar cell layers.
   The power conversion section converts and outputs the voltages or currents input from the solar cell layers. The anomaly determination section determines occurrence of an anomaly based on the current, voltage, or power supplied from each of the solar cell layers. Accordingly, the above-described power control apparatus can determine occurrence of an anomaly in one or some of multiple solar cell layers stacked on each other.
[2] A power control apparatus described in [1], wherein the anomaly determination section determines occurrence of an anomaly based on a ratio of current, voltage, or power supplied from each of the solar cell layers.
   In the case where an anomaly has occurred in one or some of the multiple solar cell layers, the ratio of the current, voltage, or power supplied from each of the solar cell layers is likely to change significantly. Therefore, the above-described power control apparatus can determine occurrence of an anomaly on the basis of the ratio of the current, voltage, or power supplied from each of the solar cell layers.
[3] A power control apparatus described in [1], wherein the anomaly determination section determines occurrence of an anomaly based on a proportion of current, voltage, or power supplied from each of the solar cell layers to a sum of the currents, voltages, or powers supplied from the solar cell layers.
   In the case where an anomaly has occurred in one or some of the multiple solar cell layers, the proportion of the current, voltage, or power supplied from each of the solar cell layers to the sum of the currents, voltages, or powers supplied from the solar cell layers is likely to change significantly. Therefore, the above-described power control apparatus can determine occurrence of an anomaly on the basis of the proportion of the current, voltage, or power supplied from each of the solar cell layers to the sum of the currents, voltages, or powers supplied from the solar cell layers.
[4] A power control apparatus described in [2] or [3], wherein the anomaly determination section determines occurrence of an anomaly based on current, voltage, or power supplied from the solar cell layers, on condition that current, voltage, or power supplied from at least one of the solar cell layers is outside a normal range set for the solar cell layer.
   In the case where the current, voltage, or power supplied from a solar cell layer is inside the normal range, that the solar cell layer is highly likely to be normal. The above-described power control apparatus can easily avoid erroneous determination of occurrence of an anomaly, by determining occurrence of an anomaly on condition that the current, voltage, or power supplied from at least one of the solar cell layers is outside the normal range.
[5] A power control apparatus described in any one of [1] to [4], wherein the anomaly determination section determines occurrence of an anomaly based on current, voltage, or power supplied from each of the solar cell layers, and a period of use of the solar cell panel.
   The above-described power control apparatus can determine occurrence of an anomaly in consideration of the influence of deterioration of the solar cell panel over time such as an increase in resistance.
[6] A power control apparatus described in any one of [1] to [5], wherein the anomaly determination section determines occurrence of an anomaly based on current, voltage, or power supplied from each of the solar cell layers, and an index that influences an incident angle of sunlight to the solar cell panel.
   The above-described power control apparatus can determine occurrence of an anomaly in consideration of the manner of incidence of sunlight.
[7] A power control apparatus described in any one of [1] to [6], wherein the anomaly determination section determines occurrence of an anomaly based on current, voltage, or power supplied from each of the solar cell layers, and an altitude of a location where the solar cell panel is disposed.
   The above-described power control apparatus can determine occurrence of an anomaly in consideration of the ratio between direct light and scattered light, which changes with the altitude.
[8] A power control apparatus described in any one of [1] to [7], wherein the anomaly determination section determines occurrence of an anomaly based on current, voltage, or power supplied from each of the solar cell layers, after a state in which the power supplied from some or all of the solar cell layers is greater than a reference value has continued for a certain period of time.
   The above-described power control apparatus can determine occurrence of an anomaly in a state in which the power generated by the solar cell layers is stable.
[9] A power control apparatus described in any one of [1] to [8], wherein the power conversion sections are provided corresponding to each of the solar cell layers, and the power conversion sections each convert and output the voltage or current input from a corresponding one of the solar cell layers.
   The above-described power control apparatus can convert and output the voltage or current input from each of the solar cell layer by the power conversion sections individually provided for each of the solar cell layer.
[10] A power control apparatus described in any one of [1] to [8],
   wherein changeover switches are provided corresponding to each of the solar cell layers,
   wherein each of the solar cell layer is connected to the power conversion section via the changeover switch corresponding thereto,
   wherein the power control apparatus includes a control section for controlling the changeover switches, and
   wherein the control section sequentially performs a changeover process of turning on only the changeover switch corresponding to one of the solar cell layers, for each of the changeover switches corresponding to each of the solar cell layers.

The above-described power control apparatus can sequentially convert and output the voltages input from each of the solar cell layers since the changeover process is sequentially performed for each of the changeover switches corresponding to each of the solar cell layers.

### [Details of embodiments of the present disclosure]

### 1. First embodiment

### 1-1. Outline of in-vehicle system

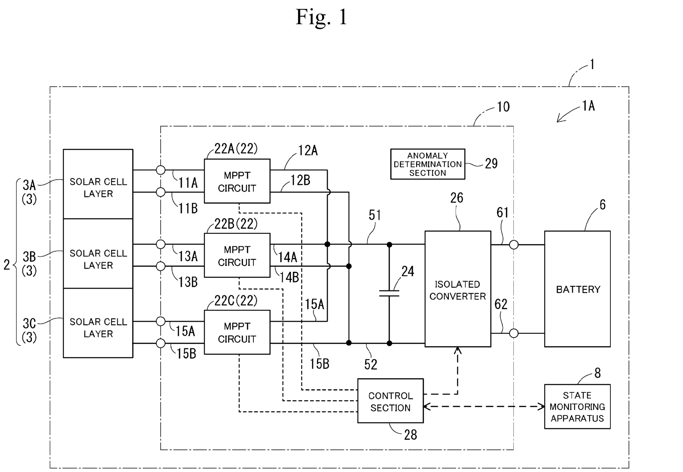

An in-vehicle system 1A which is a power control system mounted in a vehicle 1 is shown in Fig. 1 as an example. The in-vehicle system 1A includes a solar cell panel 2, a power control apparatus 10, a battery 6, and a state monitoring apparatus 8. The type of the vehicle 1 is not particularly limited, and the vehicle 1 may be a mobile vehicle, for example, an electric vehicle or a hybrid vehicle.

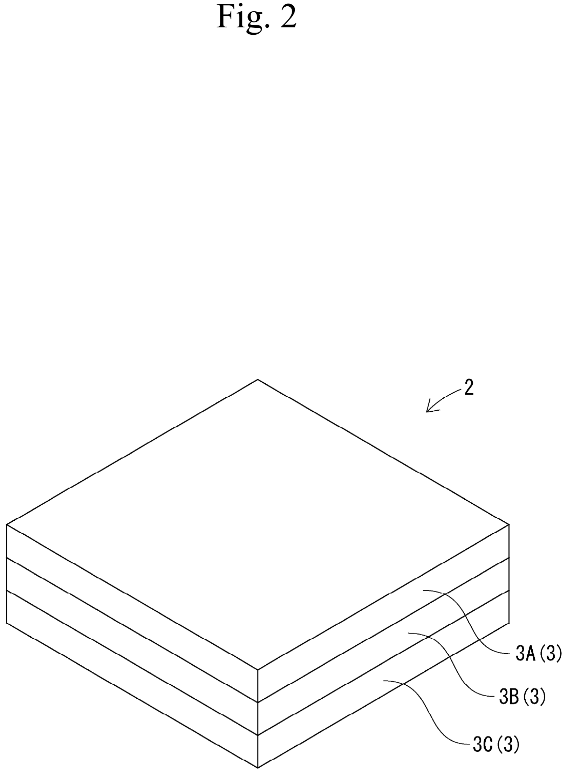

As shown in Fig. 2, the solar cell panel 2 has a structure in which multiple solar cell layers 3 (specifically, solar cell layer 3A, 3B, and 3C) are stacked on each other. The solar cell panel 2 is a multi-junction solar cell. The solar cell layers 3A, 3B, and 3C each absorb light of different wavelengths. Each solar cell layer 3 is formed by connecting multiple solar cells which convert light energy to power. Each solar cell layer 3 outputs, to the power control apparatus 10, the power generated by the multiple solar cells in accordance with irradiation light. At least one solar cell panel 2 is provided in the vehicle 1.

The battery 6 is a vehicle battery. The battery 6 is, for example, a high-voltage battery that can supply power to a drive motor (motor for providing power to wheels of the vehicle). For example, a lithium ion battery or the like is suitably used as the battery 6. The battery 6 can output a predetermined DC voltage from its opposite ends. A high-potential-side electrode of the battery 6 is electrically connected to a conducting path 61, and a low-potential-side electrode of the battery 6 is electrically connected to a conducting path 62.

The state monitoring apparatus 8 is configured as a control apparatus including a detection section, a communication section, an information processing section, etc., and has a function of monitoring the state of the battery 6 and a function of communicating with the outside. For example, the state monitoring apparatus 8 has a function of detecting the output voltage of the battery 6 (the voltage between the opposite ends) and sending the output voltage of the battery 6 to the control section 28. The output voltage of the battery 6 is a potential difference between the potential of the high-potential-side electrode whose potential is the highest in the battery 6 and the potential of the low-potential-side electrode whose potential is the lowest in the battery 6.

Although detailed illustrations are omitted, the in-vehicle system 1A includes a battery management system (BMS) which has a function of preventing overcharging and overdischarging of the cells constituting the battery 6, a function of preventing overcurrent of the cells, a function of managing the temperatures of the cells, a function of calculating the quantity of electric energy remaining in the battery, a function of equalizing the cell voltages (cell balance), etc.

The power control apparatus 10 is a power control apparatus for the solar cell panel. The power control apparatus 10 can receive power from the solar cell panel and supply output power (based on the received power) to the battery 6. The power control apparatus 10 has a function of controlling the power input from the solar cell panel 2 and can perform step-down operation and step-up operation therein.

### 1-2. Basic configuration of power control apparatus

The power control apparatus 10 controls the power input from the solar cell panel 2, and determines occurrence of an anomaly on the basis of the current, voltage, or power input from the solar cell panel 2. The power control apparatus 10 includes a plurality of MPPT circuits 22 (specifically, MPPT circuits 22A, 22B, and 22C), a capacitor 24, an isolated converter 26, the control section 28, and an anomaly determination section 29.

The MPPT circuits 22 can be controlled by the control section 28. Each of the MPPT circuits 22 is a circuit that can operate in an MPPT (maximum power point tracking) method under the control by the control section 28.

The MPPT circuits 22 are each provided corresponding to each of the solar cell layers 3. Specifically, the MPPT circuit 22A is provided for the solar cell layer 3A, the MPPT circuit 22B is provided for the solar cell layer 3B, and the MPPT circuit 22C is provided for the solar cell layer 3C.

Each MPPT circuit 22 includes a power conversion section 30 and detection sections 41 and 42. The power conversion section 30 is configured as a non-isolated DC-DC converter; specifically, as a known chopper circuit.

The power conversion sections 30 of the MPPT circuits 22A, 22B, and 22C will be referred to also as power conversion sections 30A, 30B, and 30C, respectively. The detection sections 41 of the MPPT circuits 22A, 22B, and 22C will be referred to also as detection sections 41A, 41B, and 41C, respectively. The detection sections 42 of the MPPT circuits 22A, 22B, and 22C will be referred to also as detection sections 42A, 42B, and 42C, respectively.

Conducting paths 11A and 11B are conducting paths for supplying the power based on power generation in the solar cell layer 3A to the power conversion section 30A. The conducting path 11A is a conducting path through which the current input from the solar cell layer 3A flows toward the power conversion section 30A, and the conducting paths 11A and 11B are conducting paths to which the voltage input from the solar cell layer 3A can be applied. Conducting paths 12A and 12B are conducting paths through which the power supplied from the MPPT circuit 22A is transmitted. The conducting path 12A is a conducting path through which the output current supplied from the MPPT circuit 22A flows. The conducting paths 12A and 12B are conducting paths to which the output voltage supplied from the MPPT circuit 22A can be applied.

The power conversion section 30A is provided between the pair of conducting paths 11A and 11B and the pair of conducting paths 12A and 12B, performs step-up operation so as to increase the voltage input from the solar cell layer 3A, and performs power conversion so as to supply output power. When the power conversion section 30A performs the above-described step-up operation, the power conversion section 30A performs a step-up, based on the input voltage applied between the pair of conducting paths 11A and 11B, so as to apply an output voltage higher than the input voltage between the pair of conducting paths 12A and 12B. The voltage applied to the conducting path 11A is the voltage of the conducting path 11A with respect to the conducting path 11B; specifically, the potential difference between the conducting paths 11A and 11B. The voltage applied to the conducting path 12A is the voltage of the conducting path 12A with respect to the conducting path 12B; specifically, the potential difference between the conducting paths 12A and 12B. The power conversion section 30A may have a circuit configuration capable of step-down operation, or may have a circuit configuration capable of both of step-up operation and step-down operation.

Conducting paths 13A and 13B are conducting paths for supplying the power based on power generation in the solar cell layer 3B to the power conversion section 30B. The conducting path 13A is a conducting path through which the current input from the solar cell layer 3B flows toward the power conversion section 30B, and the conducting paths 13A and 13B are conducting paths to which the voltage input from the solar cell layer 3B can be applied. Conducting paths 14A and 14B are conducting paths through which the power supplied from the MPPT circuit 22B is transmitted. The conducting path 14A is a conducting path through which the output current supplied from the MPPT circuit 22B flows. The conducting paths 14A and 14B are conducting paths to which the output voltage supplied from the MPPT circuit 22B can be applied.

The power conversion section 30B is provided between the pair of conducting paths 13A and 13B and the pair of conducting paths 14A and 14B, performs step-up operation so as to increase the voltage input from the solar cell layer 3B, and performs power conversion so as to supply output power. When the power conversion section 30B performs the above-described step-up operation, the power conversion section 30B performs a step-up, based on the input voltage applied between the pair of conducting paths 13A and 13B, so as to apply an output voltage higher than the input voltage between the pair of conducting paths 14A and 14B. The voltage applied to the conducting path 13A is the voltage of the conducting path 13A with respect to the conducting path 13B; specifically, the potential difference between the conducting paths 13A and 13B. The voltage applied to the conducting path 14A is the voltage of the conducting path 14A with respect to the conducting path 14B; specifically, the potential difference between the conducting paths 14A and 14B. The power conversion section 30B may have a circuit configuration capable of step-down operation, or may have a circuit configuration capable of both of step-up operation and step-down operation.

Conducting paths 15A and 15B are conducting paths for supplying the power based on power generation in the solar cell layer 3C to the power conversion section 30C. The conducting path 15A is a conducting path through which the current input from the solar cell layer 3C flows toward the power conversion section 30C, and the conducting paths 15A and 15B are conducting paths to which the voltage input from the solar cell layer 3C can be applied. Conducting paths 16A and 16B are conducting paths through which the power supplied from the MPPT circuit 22C is transmitted. The conducting path 16A is a conducting path through which the output current supplied from the MPPT circuit 22C flows. The conducting paths 16A and 16B are conducting paths to which the output voltage supplied from the MPPT circuit 22C can be applied.

The power conversion section 30C is provided between the pair of conducting paths 15A and 15B and the pair of conducting paths 16A and 16B, performs step-up operation so as to increase the voltage input from the solar cell layer 3C, and performs power conversion so as to supply output power. When the power conversion section 30C performs the above-described step-up operation, the power conversion section 30C performs a step-up, based on the input voltage applied between the pair of conducting paths 15A and 15B, so as to apply an output voltage higher than the input voltage between the pair of conducting paths 16A and 16B. The voltage applied to the conducting path 15A is the voltage of the conducting path 15A with respect to the conducting path 15B; specifically, the potential difference between the conducting paths 15A and 15B. The voltage applied to the conducting path 16A is the voltage of the conducting path 16A with respect to the conducting path 16B; specifically, the potential difference between the conducting paths 16A and 16B. The power conversion section 30C may have a circuit configuration capable of step-down operation, or may have a circuit configuration capable of both of step-up operation and step-down operation.

The detection section 41A includes a current detection section and a voltage detection section. The detection section 41A is provided in the middle of the conducting path 11A. The current detection section of the detection section 41A provides the control section 28 and the anomaly determination section 29 with a detection value that can specify the current value at the detection position of the current detection section in the conducting path 11A. The voltage detection section of the detection section 41A provides the control section 28 and the anomaly determination section 29 with a detection value that can specify the voltage value (voltage value between the conducting paths 11A and 11B) at the detection position of the voltage detection section in the conducting path 11A.

The detection section 42A includes a current detection section and a voltage detection section. The detection section 42A is provided in the middle of the conducting path 12A. The current detection section of the detection section 42A provides the control section 28 and the anomaly determination section 29 with a detection value that can specify the current value at the detection position of the current detection section in the conducting path 12A. The voltage detection section of the detection section 42A provides the control section 28 and the anomaly determination section 29 with a detection value that can specify the voltage value (voltage value between the conducting paths 12A and 12B) at the detection position of the voltage detection section in the conducting path 12A.

The detection section 41B includes a current detection section and a voltage detection section. The detection section 41B is provided in the middle of the conducting path 13A. The current detection section of the detection section 41B provides the control section 28 and the anomaly determination section 29 with a detection value that can specify the current value at the detection position of the current detection section in the conducting path 13A. The voltage detection section of the detection section 41B provides the control section 28 and the anomaly determination section 29 with a detection value that can specify the voltage value (voltage value between the conducting paths 13A and 13B) at the detection position of the voltage detection section in the conducting path 13A.

The detection section 42B includes a current detection section and a voltage detection section. The detection section 42B is provided in the middle of the conducting path 14A. The current detection section of the detection section 42B provides the control section 28 and the anomaly determination section 29 with a detection value that can specify the current value at the detection position of the current detection section in the conducting path 14A. The voltage detection section of the detection section 42B provides the control section 28 and the anomaly determination section 29 with a detection value that can specify the voltage value (voltage value between the conducting paths 14A and 14B) at the detection position of the voltage detection section in the conducting path 14A.

The detection section 41C includes a current detection section and a voltage detection section. The detection section 41C is provided in the middle of the conducting path 15A. The current detection section of the detection section 41C provides the control section 28 and the anomaly determination section 29 with a detection value that can specify the current value at the detection position of the current detection section in the conducting path 15A. The voltage detection section of the detection section 41C provides the control section 28 and the anomaly determination section 29 with a detection value that can specify the voltage value (voltage value between the conducting paths 15A and 15B) at the detection position of the voltage detection section in the conducting path 15A.

The detection section 42C includes a current detection section and a voltage detection section. The detection section 42C is provided in the middle of the conducting path 16A. The current detection section of the detection section 42C provides the control section 28 and the anomaly determination section 29 with a detection value that can specify the current value at the detection position of the current detection section in the conducting path 16A. The voltage detection section of the detection section 42C provides the control section 28 and the anomaly determination section 29 with a detection value that can specify the voltage value (voltage value between the conducting paths 16A and 16B) at the detection position of the voltage detection section in the conducting path 16A.

The control section 28 includes, for example, a CPU for performing various arithmetic processes, a storage section (ROM, RAM, etc.) for storing various pieces of information, a communication section which is a communication interface for communicating with external devices, and so on. The detection signals from the detection sections 41 and 42 are given to the control section 28. The control section 28 can cause the power conversion sections 30 to perform step-up operation and/or step-down operation.

One electrode of the capacitor 24 is electrically connected to a conducting path 51, and the other electrode of the capacitor 24 is electrically connected to a conducting path 52. The capacitor 24 can be charged and discharged between the pair of conducting paths 51 and 52. The conducting path 51 is electrically connected to the conducting paths 12A, 14A, and 16A in such a manner that the conducting path 51 is short-circuited with each of the conducting paths 12A, 14A, and 16A. The conducting path 52 is electrically connected to the conducting paths 12B, 14B, and 16B in such a manner that the conducting path 52 is short-circuited with each of the conducting paths 12B, 14B, and 16B.

The isolated converter 26 is an isolated DC-DC converter. The isolated converter 26 can perform step-up operation of stepping up the voltage applied between the pair of conducting paths 51 and 52 and applying the stepped up DC voltage to the conducting paths 61 and 62. The isolated converter 26 can perform step-down operation of stepping down the voltage applied between the pair of conducting paths 61 and 62 and applying the stepped down DC voltage to the conducting paths 51 and 52. Control of the isolated converter 26 is performed, for example, by the control section 28.

The anomaly determination section 29 determines occurrence of an anomaly. The anomaly determination section 29 is configured to include, for example, a CPU for performing various arithmetic processes, a storage section (ROM, RAM, etc.) for storing various pieces of information, a communication section which is a communication interface for communicating with external devices, and so on. In the present embodiment, the anomaly determination section 29 is configured by the same control circuit as the control section 28. However, the anomaly determination section 29 may be configured by a different control circuit. The detection signals from the detection sections 41 are given to the anomaly determination section 29. The anomaly determination section 29 determines occurrence of an anomaly on the basis of the detection signals from the detection sections 41.

### 1-3. Operation of power control apparatus

In the power control apparatus 10, the control section 28 can perform power regulation control. The power regulation control is, for example, maximum power point tracking control. In the power regulation control, tracking control is performed after search control. The control section 28 may execute the search control for the power conversion section 30 at predetermined constant intervals (for example, every 60 to 600 seconds), or may execute the search control for the power conversion section 30 when the control section 28 determines that the sunlight irradiation condition of the solar cell panel 2 has changed suddenly. After the search control, the control section 28 executes tracking control that reflects the search control, for the power conversion section 30.

The control section 28 performs the power regulation control in parallel for the power conversion sections 30 provided in the plurality of MPPT circuits 22. As a result, operations of supplying powers from the solar cell layers 3 to the respective power conversion sections 30 are performed in parallel. Each power conversion section 30 performs step-up operation so as to step up the voltage input from the corresponding solar cell layer 3 and supplies output power.

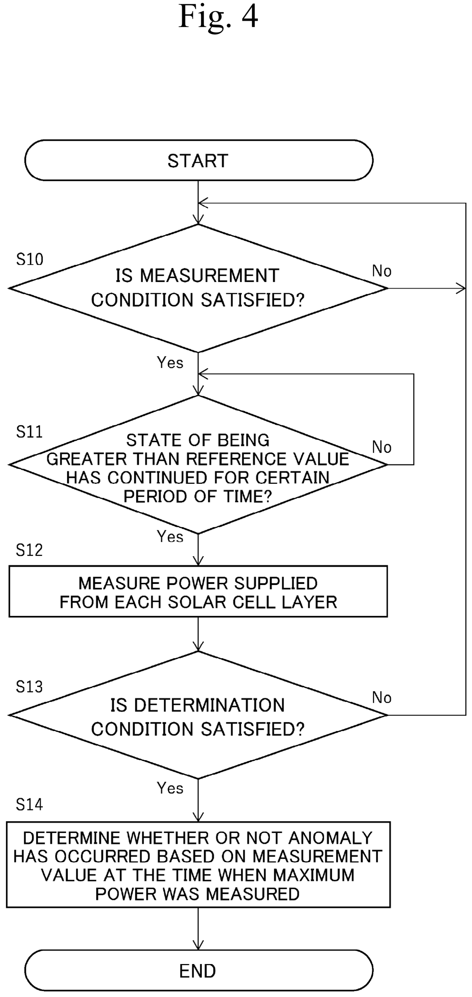

During execution of the power regulation control, the anomaly determination section 29 determines occurrence of an anomaly on the basis of the power supplied from each solar cell layer 3. The anomaly determination section 29 performs an anomaly determination process shown in Fig. 4, for example, when a start condition is satisfied. The start condition may be, for example, that the power regulation control has been started, may be that the power control apparatus 10 has started up, or may be another condition.

In step S10 of Fig. 4, the anomaly determination section 29 determines whether or not a measurement condition is satisfied. The measurement condition may be, for example, a condition that is satisfied upon arrival of each of the multiple predetermined times set beforehand within a day. The predetermined times are, for example, 10:00, 12:00, 14:00, etc. The measurement condition may be a condition that is satisfied every time a predetermined period of time (for example, one hour, two hours, etc.) elapses in a predetermined measurement period (for example, from 10:00 to 14:00, etc.). The measurement condition may be other conditions.

In the case where the anomaly determination section 29 determines in step S10 that the measurement condition is not satisfied, the anomaly determination section 29 returns to step S10. That is, the anomaly determination section 29 remains in a waiting state until it determines that the measurement condition is satisfied.

In the case where the anomaly determination section 29 determines in step S10 that the measurement condition is satisfied, the anomaly determination section 29 proceeds to step S11. In step S11, the anomaly determination section 29 determines whether or not a state in which power supplied from some or all of the solar cell layers 3 is greater than a reference value has continued for a certain period of time (for example, 10 seconds, etc.). In the case of determining whether or not a state in which power supplied from some of the solar cell layers 3 is greater than the reference value has continued for the certain period of time, the anomaly determination section 29 may determine whether or not a state in which power supplied from any one of the solar cell layers 3 is greater than the reference value has continued for the certain period of time, or may determine whether or not a state in which power supplied from a specific solar cell layer 3 is greater than the reference value has continued for the certain period of time. The reference value may differ among the solar cell layers 3 or may be commonly used for all of the solar cell layers 3.

The anomaly determination section 29 calculates the power supplied from the solar cell layer 3A on the basis of the detection signal from the detection section 41A. The anomaly determination section 29 calculates the power supplied from the solar cell layer 3B on the basis of the detection signal from the detection section 41B. The anomaly determination section 29 calculates the power supplied from the solar cell layer 3C on the basis of the detection signal from the detection section 41C.

In the case where the anomaly determination section 29 determines in step S11 that the state in which power supplied from some or all of the solar cell layers 3 is greater than the reference value has not continued for the certain period of time, the anomaly determination section 29 returns to step S11. That is, the anomaly determination section 29 remains in a waiting state until the anomaly determination section 29 determines that the state in which power supplied from some or all of the solar cell layers 3 is greater than the reference value has continued for the certain period of time.

In the case where the anomaly determination section 29 determines that the state in which power supplied from some or all of the solar cell layers 3 is greater than the reference value has continued for the certain period of time, the anomaly determination section 29 proceeds to step S12. In step S12, the anomaly determination section 29 measures the power supplied from each solar cell layer 3. The anomaly determination section 29 measures the power on the input side of each power conversion section 30. The anomaly determination section 29 measures the power supplied from each solar cell layer 3 on the basis of the detection signal from each corresponding detection section 41.

After measurement in step S12, the anomaly determination section 29 determines in step S13 whether or not a determination condition is satisfied. In the case where the measurement condition is the condition that is satisfied upon arrival of each of the predetermined times, the determination condition may be, for example, that the last predetermined time of the day has arrived. In the case where the measurement condition is the condition that is satisfied every time the predetermined period of time elapses in the measurement period, the determination condition may be, for example, that the last predetermined period of time in the measurement period has elapsed.

In the case where the anomaly determination section 29 determines that the determination condition is not satisfied, the anomaly determination section 29 returns to step S10. That is, the anomaly determination section 29 measures the power supplied from each solar cell layer 3, every time the measurement condition is satisfied, until the anomaly determination section 29 determines that the determination condition is satisfied.

In the case where the anomaly determination section 29 determines that the determination condition is satisfied, the anomaly determination section 29 proceeds to step S14. In step S14, the anomaly determination section 29 determines whether or not an anomaly has occurred on the basis of the measurement values at the time when the maximum power was measured.

For example, the anomaly determination section 29 performs measurement, at 10:00, 12:00, and 14:00, and determines the time when the maximum power was measured. In the case where the maximum power was measured at 12:00, for example, the anomaly determination section 29 employs, as a measurement value at the time when the maximum power was measured, the measurement value of each solar cell layer 3 measured at 12:00, and determines whether or not an anomaly has occurred on the basis of the measurement values. By virtue of this configuration, the anomaly determination section 29 can determine that an anomaly has occurred in one or some of the multiple solar cell layers 3 stacked on each other.

Specifically, the anomaly determination section 29 may determine occurrence of an anomaly on the basis of the ratio of the powers supplied from the solar cell layers 3 as follows. The anomaly determination section 29 calculates the ratio of the solar cell layers 3A, 3B, and 3C, while regarding the whole as 10, by using the measurement values at the time when the maximum power was measured. The anomaly determination section 29 then determines whether or not the ratio falls within a normal range. The normal range is previously determined, for example, on the basis of experimental data. The normal range of the solar cell layers 3A, 3B, and 3C is, for example, 2 to 5 : 1 to 4 : 1 to 4. For example, in the case where the calculated ratio of the solar cell layers 3A, 3B, and 3C is 4 : 3 : 3, the anomaly determination section 29 determines that the ratio of the solar cell layers 3A, 3B, and 3C is within the normal range. For example, in the case where the calculated ratio of the solar cell layers 3A, 3B, and 3C is 0 : 5 : 5, the anomaly determination section 29 determines that the ratio of the solar cell layers 3A, 3B, and 3C is outside the normal range. In the case where the anomaly determination section 29 determines that the calculated ratio is outside the normal range, the anomaly determination section 29 determines that an anomaly has occurred. By virtue of this configuration, the anomaly determination section 29 can determine occurrence of an anomaly on the basis of the ratio of the power supplied from each solar cell layer 3.

Alternatively, the anomaly determination section 29 may determine occurrence of an anomaly on the basis of the proportion of the power supplied from each solar cell layer 3 to the sum of the powers supplied from the solar cell layers 3 as follows. By using the measurement values at the time when the maximum power was measured, the anomaly determination section 29 calculates the sum of the powers supplied from the solar cell layers 3 and calculates the proportion of the power supplied from each solar cell layer 3. The anomaly determination section 29 then determines whether or not the calculated proportion is within a normal range. The normal range is previously determined, for example, on the basis of experimental data. In the case where the anomaly determination section 29 determines that the calculated proportion is outside the normal range, the anomaly determination section 29 determines that an anomaly has occurred. By virtue of this configuration, the anomaly determination section 29 can determine occurrence of an anomaly on the basis of the proportion of the power supplied from each solar cell layer 3 to the sum of the powers supplied from the solar cell layers 3.

In addition, as described above, the anomaly determination section 29 determines occurrence of an anomaly on the basis of the power supplied from each solar cell layer 3 after the state in which the power supplied from some or all of the solar cell layers 3 is greater than the reference value has continued for the certain period of time. Therefore, the anomaly determination section 29 can determine occurrence of an anomaly in a state in which the power generated by each solar cell layer 3 is stable.

The anomaly determination section 29 may determine occurrence of an anomaly on the basis of the powers supplied from the solar cell layers 3, on condition that the power supplied from at least one solar cell layer 3 is outside a normal range set for the solar cell layer 3. By virtue of this configuration, the anomaly determination section 29 can easily avoid erroneous determination of occurrence of an anomaly. For example, a range corresponding to a state in which no power is supplied is determined as the normal range. The normal range is set to, for example, 1 W or less.

The anomaly determination section 29 may determine occurrence of an anomaly on the basis of the power supplied from each solar cell layer 3, and a period of use of the solar cell panel 2. For example, the anomaly determination section 29 may measure the period of use of the solar cell panel 2, correct the above-described normal range on the basis of the measured period of use, and determine occurrence of an anomaly on the basis of the corrected normal range. By virtue of this configuration, the anomaly determination section 29 can determine occurrence of an anomaly in consideration of the influence of deterioration of the solar cell panel 2 over time such as an increase in resistance.

The anomaly determination section 29 may determine occurrence of an anomaly on the basis of the power supplied from each solar cell layer 3, and an index that influences the incident angle of sunlight to the solar cell panel 2. For example, the anomaly determination section 29 may correct the above-described normal range on the basis of the index that influences the incident light of sunlight to the solar cell panel 2, and determine occurrence of an anomaly on the basis of the corrected normal range. By virtue of this configuration, the anomaly determination section 29 can determine occurrence of an anomaly in consideration of the incident angle of sunlight. Examples of the index that influences the incident angle of sunlight to the solar cell panel 2 include: time, location information (e.g., latitude) of the solar cell panel 2, season, and date, etc. Also, examples of the index that relates to the solar cell panel 2 itself and influences the incident angle of sunlight to the solar cell panel 2 include: the shape of the solar cell panel 2 (for example, convex or concave shape), mounting angle, vehicle direction (vehicle elevation angle, vehicle azimuth, vehicle roll angle).

The anomaly determination section 29 may determine occurrence of an anomaly on the basis of the power supplied from each solar cell layer 3, and the altitude of the location where the solar cell panel 2 is disposed. For example, the anomaly determination section 29 may correct the above-described normal range on the basis of the altitude of the location where the solar cell panel 2 is disposed, and determine occurrence of an anomaly on the basis of the corrected normal range. By virtue of this configuration, the anomaly determination section 29 can determine occurrence of an anomaly in consideration of the ratio between direct light and scattered light, which changes with the altitude.

### 2. Second embodiment

In a second embodiment, a configuration in which a single power conversion section 30 is provided will be described. In the second embodiment, constitutional elements that are identical to those of the first embodiment are denoted by the same reference numerals and their detailed description will not be repeated.

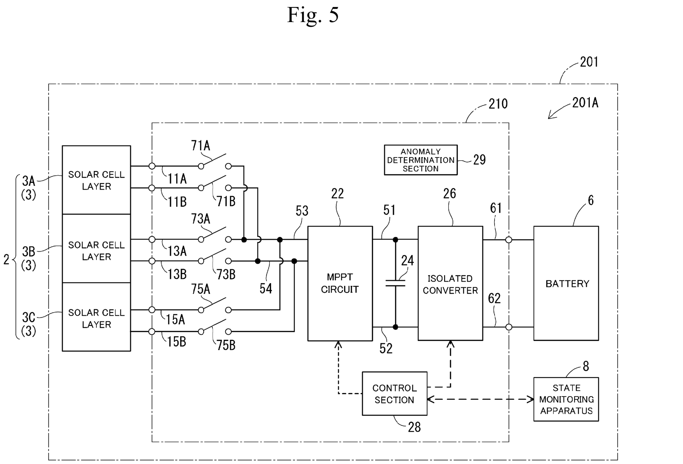

An in-vehicle system 201A which is a power control system mounted in a vehicle 201 is shown in Fig. 5 as an example. The in-vehicle system 201A includes a solar cell panel 2, a power control apparatus 210, a battery 6, and a state monitoring apparatus 8.

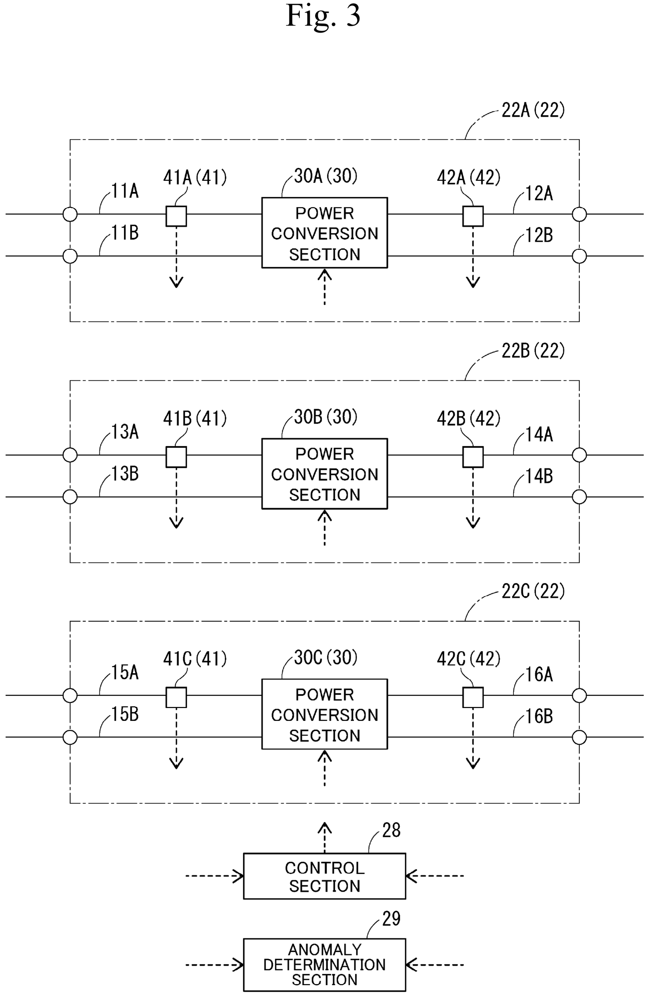

The power control apparatus 210 includes an MPPT circuit 22, a capacitor 24, an isolated converter 26, a control section 28, and an anomaly determination section 29. The power conversion section 30 (see Fig. 3) provided in the MPPT circuit 22 steps up or steps down the input voltage applied between a pair of conducting paths 53 and 54, and applies output voltage between a pair of conducting paths 51 and 52. Conducting paths 11A, 13A, and 15A are electrically connected to the conducting path 53. Conducting paths 11B, 13B, and 15B are electrically connected to the conducting path 54.

The power control apparatus 210 includes changeover switches 71A, 71B, 73A, 73B, 75A, and 75B. The changeover switch 71A is provided in the conducting path 11A. The changeover switch 71B is provided in the conducting path 11B. The changeover switch 73A is provided in the conducting path 13A. The changeover switch 73B is provided in the conducting path 13B. The changeover switch 75A is provided in the conducting path 15A. The changeover switch 75B is provided in the conducting path 15B.

The changeover switches 71A and 71B are provided corresponding to the solar cell layer 3A. The solar cell layer 3A is connected to the power conversion section 30 via the changeover switches 71A and 71B. The changeover switches 73A and 73B are provided corresponding to the solar cell layer 3B. The solar cell layer 3B is connected to the power conversion section 30 via the changeover switches 73A and 73B. The changeover switches 75A and 75B are provided corresponding to the solar cell layer 3C. The solar cell layer 3C is connected to the power conversion section 30 via the changeover switches 75A and 75B.

The control section 28 controls the changeover switches 71A, 71B, 73A, 73B, 75A, and 75B. The control section 28 sequentially performs a changeover process of turning on only changeover switches corresponding to one solar cell layer 3, for each of the changeover switches corresponding to each of the solar cell layers 3. For example, the control section 28 first controls the changeover switches 71A and 71B corresponding to the solar cell layer 3A to an on state, and controls the changeover switches 73A, 73B, 75A, and 75B to an off state. Subsequently, the control section 28 controls the changeover switches 73A and 73B corresponding to the solar cell layer 3B to an on state, and controls the changeover switches 71A, 71B, 75A, and 75B to an off state. Subsequently, the control section 28 controls the changeover switches 75A and 75B corresponding to the solar cell layer 3C to an on state, and controls the changeover switches 71A, 71B, 73A, and 73B to an off state. As a result, the input voltage from each solar cell layers 3 is sequentially applied to the power conversion section 30. The power conversion section 30 sequentially converts and outputs the voltage input from each solar cell layers 3.

As described above, since the changeover process is sequentially performed for each of the changeover switches corresponding to each of the solar cell layers 3, the power control apparatus 210 of the second embodiment can sequentially convert and output the voltage input from each of the solar cell layers 3.

### <Other embodiments>

The present invention is not limited to the embodiments described by the above description and the drawings, and, for example, the following embodiments fall within the technical scope of the present invention. Also, various features of the above-described embodiments and the following embodiments may be combined freely so long as no conflict occurs.

In the above-described embodiments, the anomaly determination section 29 is configured to determine occurrence of an anomaly on the basis of the power supplied from each solar cell layer 3. However, the anomaly determination section 29 may be configured to determine occurrence of an anomaly on the basis of the voltage or current supplied from each solar cell layer 3.

In the above-described embodiments, the power conversion section 30 is configured by a chopper circuit. However, the chopper circuit may be changed to any of other DC-DC convertors that can perform step-down operation and/or step-up operation such as a forward-type isolated DC-DC converter and a flyback-type isolated DC-DC converter.

In the above-described embodiments, a circuit or an electrical component is not present between each of the solar cell layers 3 and a corresponding one of the MPPT circuits 22. However, a circuit or an electrical component, such as a relay, a fuse, or a filter, may be provided therebetween. The input power input to the power conversion section(s) 30 may be supplied directly from the solar cell layers 3 or supplied via some kind of intermediate circuit.

In the above-described embodiments, a drive battery (battery for the main engine) made of a lithium ion battery is exemplified as the battery 6. However, the battery 6 is not limited thereto and may be a battery for auxiliary equipment or a lead battery.

In the above-described embodiments, the number of the solar cell layers 3 stacked on each other is three. However, the number of the solar cell layers 3 stacked on each other may be two, or four or more.

It should be understood that the embodiments disclosed herein are illustrative in all respects and are not restrictive. The scope of the present invention is not limited to the embodiments disclosed herein, and is intended to include all modifications within the scope defined by the claims or within the scope equivalent to the claims.

### DESCRIPTION OF REFERENCE NUMERALS

1, 201: vehicle
1A, 201A: in-vehicle system
2: solar cell panel
3, 3A, 3B, 3C: solar cell layer
6: battery
8: state monitoring apparatus
10, 210: power control apparatus
11A, 11B, 12A, 12B, 13A, 13B, 14A, 14B, 15A, 15B, 16A, 16B,
51, 52, 53, 54, 61, 62: conducting path
22, 22A, 22B, 22C: MPPT circuit
24: capacitor
26: isolated converter
28: control section
29: anomaly determination section
30, 30A, 30B, 30C: power conversion section
41, 41A, 41B, 41C, 42, 42A, 42B, 42C: detection section
71A, 71B, 73A, 73B, 75A, 75B: changeover switch

## Claims

1. A power control apparatus that controls power input from a solar cell panel and determines occurrence of an anomaly based on current, voltage, or power supplied from the solar cell panel,
wherein the solar cell panel has a structure in which multiple solar cell layers, each absorbing light of a different wavelength, are stacked on each other,
wherein the power control apparatus comprises a power conversion section that converts and outputs voltages or currents input from the solar cell layers, and an anomaly determination section that determines occurrence of an anomaly, and
wherein the anomaly determination section determines occurrence of an anomaly based on current, voltage, or power supplied from each of the solar cell layers.

2. A power control apparatus according to claim 1, wherein the anomaly determination section determines occurrence of an anomaly based on a ratio of current, voltage, or power supplied from each of the solar cell layers.

3. A power control apparatus according to claim 1, wherein the anomaly determination section determines occurrence of an anomaly based on a proportion of current, voltage, or power supplied from each of the solar cell layers to a sum of currents, voltages, or powers supplied from the solar cell layers.

4. A power control apparatus according to claim 2 or 3, wherein the anomaly determination section determines occurrence of an anomaly based on current, voltage, or power supplied from the solar cell layers, on condition that current, voltage, or power supplied from at least one of the solar cell layers is outside a normal range set for the solar cell layer.

5. A power control apparatus according to any one of claims 1 to 3, wherein the anomaly determination section determines occurrence of an anomaly based on current, voltage, or power supplied from each of the solar cell layers, and a period of use of the solar cell panel.

6. A power control apparatus according to any one of claims 1 to 3, wherein the anomaly determination section determines occurrence of an anomaly based on current, voltage, or power supplied from each of the solar cell layers, and an index that influences an incident angle of sunlight to the solar cell panel.

7. A power control apparatus according to any one of claims 1 to 3, wherein the anomaly determination section determines occurrence of an anomaly based on current, voltage, or power supplied from each of the solar cell layers, and an altitude of a location where the solar cell panel is disposed.

8. A power control apparatus according to any one of claims 1 to 3, wherein the anomaly determination section determines occurrence of an anomaly based on current, voltage, or power supplied from each of the solar cell layers, after a state in which the power supplied from some or all of the solar cell layers is greater than a reference value has continued for a certain period of time.

9. A power control apparatus according to any one of claims 1 to 3, wherein the power conversion sections are provided corresponding to each of the solar cell layers, and the power conversion sections each convert and output voltage or current input from a corresponding one of the solar cell layers.

10. A power control apparatus according to any one of claims 1 to 3,
wherein changeover switches are provided corresponding to each of the solar cell layers,
wherein each of the solar cell layers is connected to the power conversion section via the changeover switch corresponding thereto,
wherein the power control apparatus comprises a control section for controlling the changeover switches, and
wherein the control section sequentially performs a changeover process of turning on only the changeover switch corresponding to one of the solar cell layers, for each of the changeover switches corresponding to each of the solar cell layers.
